# EUROPEAN PATENT APPLICATION

(11) **EP 4 552 974 A1**
(43) Date of publication of application: **14.05.2025**
(21) Application number: 24211840.4
(22) Date of filing: 08.11.2024
(51) Int. Cl.: B64C 13/04, G05G 9/047, B64C 13/50, B64C 27/56, G05G 1/06

(54) **SIDESTICK GRIP HAVING MINIMAL CROSS-AXIS CONTROL COUPLING**

(30) Priority: 09.11.2023 US 202363597408 P; 05.11.2024 US 202418937761
(71) Applicant: Embraer S.A., 12227-901 São José dos Campos SP (BR)
(72) Inventor: BARUZZI, Filipe Andrade, 12227-901 São José dos Campos - SP (BR); DE ANDRADE LIMA, Moacir Morais, 12227-901 São José dos Campos - SP (BR); DE FREITAS, Rafael Desideri, 12227-901 São José dos Campos - SP (BR); KAWASAKI, Takashi, 12227-901 São José dos Campos - SP (BR); NAKAYA, Takayuki, 12227-901 São José dos Campos - SP (BR); ANDRIESSEN, Wilhelm Vatanabe, 12227-901 São José dos Campos - SP (BR)
(74) Representative: Liesegang, Eva

(57) **Abstract**

Sidestick grips are disclosed which minimize cross-axis control coupling about three or more control axes, wherein one of the control axes provides directional (yaw) input by twisting the grip in clockwise/counterclockwise directions. Minimizing cross-axis control according to the embodiments disclosed herein is accomplished principally by having the Grip Reference Point (GRP) (i.e., the theoretical point of application of pitch and roll forces) of the sidestick grip to be substantially coincident with the yaw axis of rotation. By providing the GRP substantially coincident with the yaw axis of rotation, unintentional yaw torque is minimized when control input is exerted on the sidestick in the pitch and roll axes.

## Description

### CROSS-REFERENCE TO RELATED APPLICATION

This application is based on and claims domestic priority benefits from U.S. Provisional Application Serial No. 63/597,408 filed on November 9, 2023, and is related to U.S. Design Application Serial No. xx/xxx,xxx (Atty. Dkt. BHD-4439-0445) filed concurrently herewith, the entire contents of each being expressly incorporated hereinto by reference.

### FIELD

The embodiments disclosed herein relate generally to the field of aircraft flight control systems. In especially preferred forms, the embodiments herein are directed toward sidestick grips that are capable of commanding control of an aircraft relative to multiple (e.g., 3 or 4) axes.

### BACKGROUND

A demand for vertical takeoff and landing (VTOL) aircraft has been created with recent technological advances, especially advances in batteries with high power densities, so as to serve passengers in urban environments. In order to reduce the weight of such VTOL aircraft, it has been proposed to use inceptors that are more compact than those proposed by the prior art.

Conventional aircraft normally use a yoke or a 2-axis sidestick with longitudinal and lateral movements so as to control aircraft attitude about the pitch and roll axes, respectively. Rudder pedals are typically used for directional (yaw) control about the yaw axis. Rudder pedals are however infrequently employed on modern fly-by-wire (FBW) aircraft systems as compared to previous aircraft which employ mechanical connections because the FBW systems are capable of automatically performing tasks, such as coordinated turns, that would normally require separate pedal control input. Therefore, there are advantages in using more compact configuration of inceptors on aircraft of the emerging Urban Air Mobility (UAM) market. In this regard, it has been proposed that rudder pedals can be substituted by 3-axis sidestick grips in which yaw is controlled by twisting the sidestick grip while pitch and roll are controlled by forward/rearward movements and inboard/outboard movements of the sidestick grip, respectively.

One of the challenges related to sidesticks with three or more axes is how to minimize cross-axis control coupling (i.e., allowing input to one of the control axes without activating control input to any of the remaining control axes). Minimizing cross-axis control coupling requires control force and displacement sensitivity for each axis of control to be compatible, so that normal inputs on one control axis will not cause significant unintentional inputs on the other axes. Traditional sidesticks use independent pre-loaded springs to avoid cross-axis coupling between pitch and roll. However, the shape of grips of conventional 2-axis sidesticks is not suitable to avoid cross-axis coupling when control is needed about the yaw axis. The point where roll and pitch forces are applied, also known as Grip Reference Point (GRP), is generally located far from the yaw axis of rotation, generating a moment arm which in turn causes significant unintentional yaw movement when force is applied to those axes.

The issue of cross-axis control coupling has been minimized according to the currently known art by increasing the spring pre-load or breakout force in the yaw axis of movement. According to these prior art proposals, a high torque must be applied to the sidestick when the pilot desires to issue a directional yaw command. However this conventional proposal is also undesirable as it presents control difficulty when only small directional inputs are desired. Other sidesticks proposed in the art use an almost vertical grip design, but such an arrangement is also not adequate for aircraft ergonomics. By way of reference, MIL-STD-1797A suggests that the sidestick neutral position, or cant angle, should range from 10° to 17° forward of vertical and 8° to 12° inboard of vertical. Thus, any solution to the cross-axis control problems noted previously must take into account these ergonomic demands.

As an example of the difficulty in finding an optimal solution at prior art, the following factual considerations are noted:
(a) Normal sidestick forces are around 10 Ibf for pitch axis and 5 Ibf for roll axis, as per Title 14 of the Federal Aviation Regulations (FAR) paragraph 23.143 (amendment 62), which defines forces for prolonged application on sticks.
(b) For a typical sidestick with neutral position 17° forward of vertical, and GRP 6 inches above pitch/roll pivot point, the GRP would be located almost 2 inches ahead of the yaw axis of rotation. Multiplying this distance by a typical roll force of 5 Ibf, would generate a coupling torque on the yaw axis of more than 9 in-lbf.
(c) Similar calculations for neutral position 10° inboard of vertical and a typical pitch force of 10 Ibf would generate a coupling torque on the yaw axis of more than 10 in-lbf.
(d) To counteract this coupling torque, the yaw breakout would need to be higher than these values, which is undesirable as normal directional commands would then be already on the limit to cause pilot fatigue when twisting the grip.

What has been needed in this art therefore are sidestick grips for aircraft control inputs in 3 or more axes that are ergonomically designed and minimize (if not eliminate entirely) cross-axis control coupling. It is towards providing such solutions that the embodiments disclosed herein are directed.

### SUMMARY

Broadly, the embodiments disclosed herein are directed toward functional sidestick grips that minimize cross-axis control coupling about three or more control axes, wherein one of the control axes provides directional (yaw) input by twisting the grip. Minimizing cross-axis control according to the embodiments disclosed herein is accomplished by having the Grip Reference Point (GRP) (i.e., the theoretical point of application of pitch and roll forces) which is substantially coincident with the yaw axis of rotation. In the disclosed embodiments herein whereby the GRP is substantially coincident with the yaw axis of rotation, unintentional yaw torque is minimized when control input is exerted on the sidestick in the pitch and roll axes.

According to some embodiments, a sidestick grip to allow aircraft control about at least three axes is provided, the sidestick grip having a lower grip section adapted to be gripped by a pilot's hand and defining a sidestick central axis. A base is joined to a lower end of the lower grip section and is adapted to be mounted to aircraft structure to allow movement of the lower grip section in forward/rearward directions and inboard/outboard directions to allow aircraft control about pitch and roll axes, respectively, and to allow twisting of the lower grip section in clockwise/counterclockwise directions about a yaw axis to allow aircraft control about the yaw axis. Importantly, the lower grip section defines a grip reference point (GRP) establishing a theoretical point of application of forces onto the sidestick controller about the pitch and roll axes, wherein the yaw axis is substantially coincident with the GRP and the sidestick central axis. The lower grip section may include contoured concavities allowing respective digits of a pilot's hand to rest thereagainst when the lower grip section is gripped.

In order to improve ergonomics, the base mounts the sidestick grip so as to define forward and inboard cants relative to vertical latitudinal and longitudinal planes, respectively. According to certain embodiments, the forward cant may be at angle α of 10°-17° relative to the vertical latitudinal plane, typically 12°-15°, such as 13° ± 1°, while the inboard cant may be at an angle β of 2°-10° relative to the vertical longitudinal plane, typically 4°-6°, such as about 5° ± 1°.

A throttle-shaped head section may be joined to an upper end of the lower grip section. The throttle-shaped head section may comprise a transversely oriented (relative to the centerline of the sidestick grip) semi-cylindrical first head portion, and a truncated conical second head portion protruding outwardly from the cylindrical first head portion in an inboard direction. According to some embodiments, the first head portion may comprise a recessed arcuate guide, and an arcuate segment of a thumb wheel operatively mounted to the recessed arcuate guide for thumb-activated arcuate sliding movements in forward and aft directions.

These and other aspects and advantages of the present invention will become clearer after careful consideration is given to the following detailed description of the preferred exemplary embodiments thereof.

### BRIEF DESCRIPTION OF ACCOMPANYING DRAWINGS

The disclosed invention will be better and more completely understood by referring to the following detailed description of an exemplary non-limiting illustrative embodiment of a sidestick grip in conjunction with the drawings comprised of FIGS. 1-7 of which:
FIGS. 1 and 2 are respectively top inboard and top outboard perspective views thereof;
FIGS. 3 and 4 are respectively inboard and outboard elevational views thereof.
FIGS. 5 and 6 are respectively rear and front elevational views thereof; and
FIG. 7 is a top plan view thereof.

### DETAILED DESCRIPTION OF EXEMPLARY EMBODIMENT

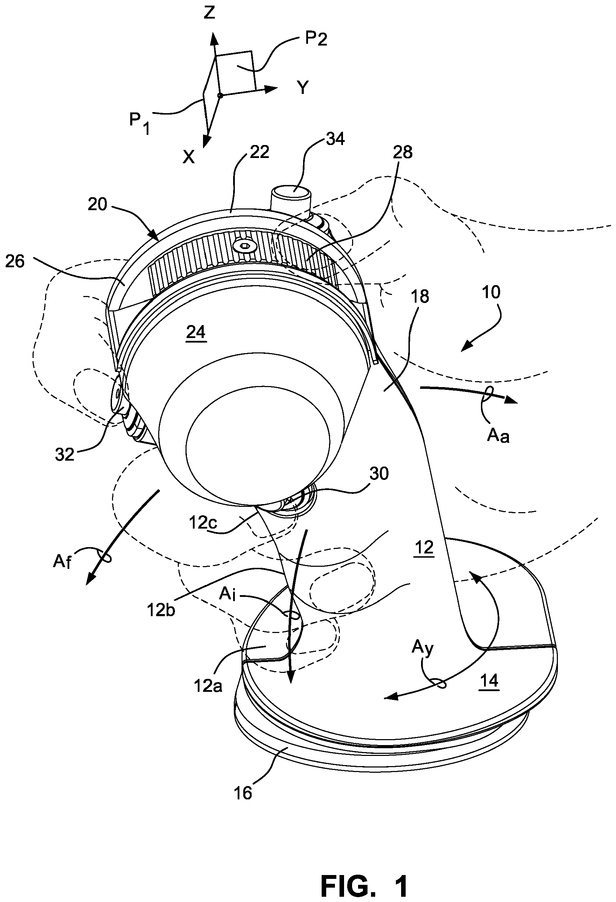

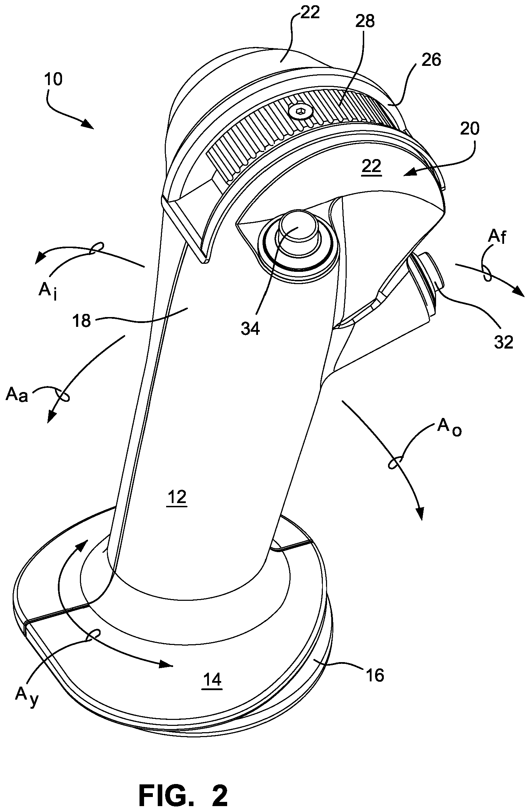

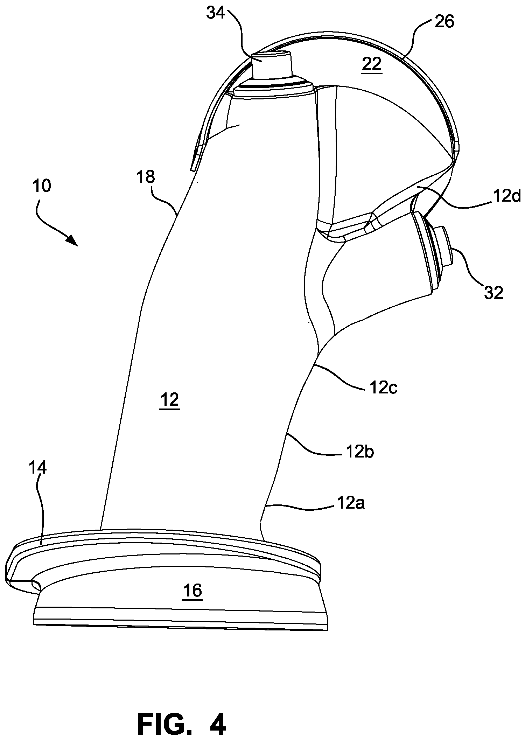

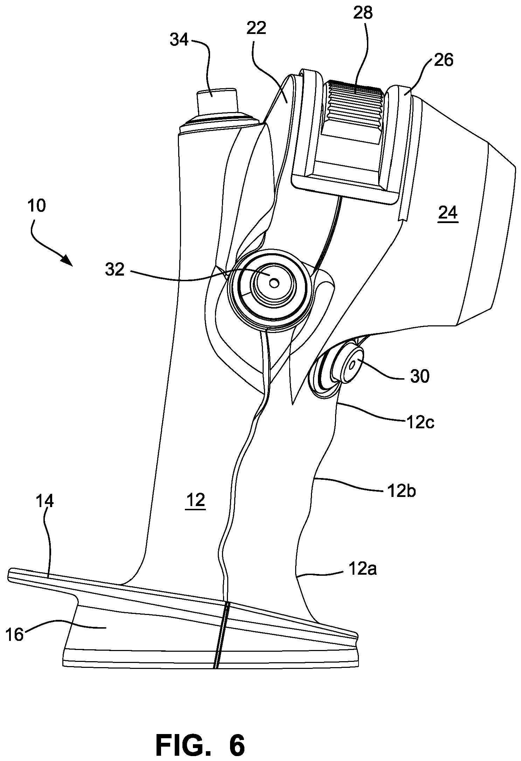

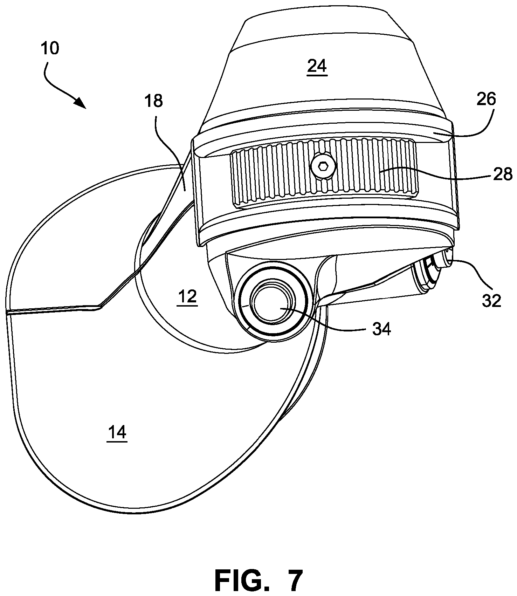

An exemplary sidestick grip 10 in accordance with an embodiment of the invention which substantially precludes cross-axis control coupling about three or more control axes is depicted in the several views of FIGS. 1-7 for use by a pilot's right hand. However, it will be appreciated that a mirror image left-handed embodiment of that shown in FIGS. 1-7 could be provided and thereby used by a pilot's left hand. Thus, the discussion below will be similarly applicable to a sidestick grip 10 that for either right or left hand use.

The sidestick grip 10 includes a lower grip section 12 extending upwardly from a lower wrist support platform 14 which is sized and configured in such a way to accommodate hand size anatomies from the 5th percentile female to the 95th percentile male (i.e., configured to be comfortably usable for about 90% of the population's hand size anatomies). A base section 16 is provided below the wrist support platform 14 so as to connect the sidestick grip 10 to support structures within the cockpit of an aircraft (not shown) to allow the sidestick grip 10 to be moved in at least three axes, i.e., moved in forward and aft directions (arrows A_{f} and Aₐ, respectively), to control aircraft pitch about an x-axis, inboard and outboard directions (arrows Aᵢ and Aₒ, respectively) to control aircraft roll about a y-axis and twisted about the centerline CL of the sidestick grip 10 to control aircraft yaw about a yaw or z-axis (arrow A_{y}) (see FIGS. 1-3). The lower grip section 12 is generally cylindrical (e.g., a diameter of between about 1 to 2 inches) and is adapted to essentially allow a pilot's palm to rest on the outboard circumferential surface as is shown in phantom line in FIG. 1. The inboard portion of the lower grip section includes contoured with concavities 12a-12c that respectively allow the lower three digits of the pilot's hand, i.e., the fifth digit (pinky finger), the fourth digit (ring finger) and the third digit (middle finger) to rest thereagainst when such digits are wrapped around the forward portion of the lower grip section 12.

The upper end of the lower grip section is joined to a transition section 18 which transitions the exterior surface of the lower grip section 12 to a throttle-shaped head section 20. The throttle-shaped head section 20 generally includes a transversely oriented semi-cylindrical first head portion 22 and a truncated conical second head portion 24 protruding outwardly from the cylindrical first head portion 22 in an inboard direction. The first head portion 22 includes a recessed arcuate guide 26 in which an arcuate segment of a thumb wheel 28 is operatively mounted for arcuate thumb-activated sliding movements in forward and aft directions. In this regard, the transition section 18 may be employed as a thumb rest when the pilot is not manipulating the thumb wheel 28. The arcuate segment of a thumb wheel 28 may therefore be slidably moved by a pilot's thumb when the lower grip section 12 is gripped to control acceleration/deceleration of the aircraft.

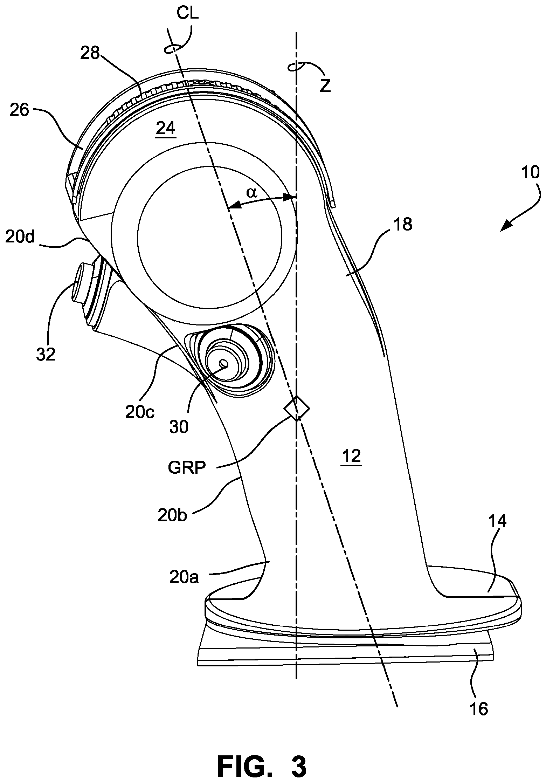

The lower grip section 12 includes a touch control steering (TCS) button 30 which protrudes outwardly in an inboard direction and is adapted to being depressed and held by the pilot when needed with the pilot's third digit (middle finger) so as to temporarily disconnect the autopilot servos and allow the pilot to manually maneuver the aircraft. Releasing the TCS button 30 will thereby re-engage the autopilot servos at the attitude as manually achieved by the pilot during autopilot disengagement. A push-to-talk (PTT) button 32 outwardly protruding in a forward and upwardly slanted direction from the transition section 18 is provided and adapted to being depressed by the pilot's second digit (index finger) when needed in order to allow radio transmissions. When not using the PTT button 32, the pilot may rest the second digit (index finger) against a concavity 20d that is contoured on the forward surface of the throttle-shaped head section 20 (see FIG. 3). A quick disconnect button 34 is positioned so as to be canted outwardly in an outboard direction at an outboard side of the throttle-shaped head section 20 and at an elevation that is lower than that of the arcuate segment of the thumb wheel 28. The pilot's thumb is thereby able to move between the thumb wheel 28 and the quick disconnect button 34 so as to disconnect the autopilot servos and allow continued manual flight control to be exercised by the pilot via the sidestick grip 10.

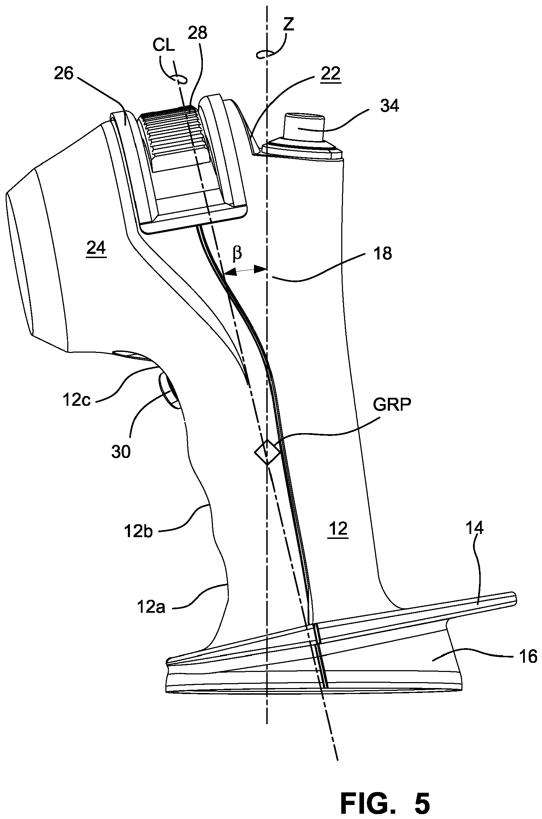

Important to the embodiment sidestick grip 10 described and shown herein, the lower grip section 12 is canted in a forward direction by an angle α relative to a latitudinal plane P1 defined by the x- and z-axes and is also canted in an inboard direction by an angle β relative to a longitudinal plane P2 defined by the y- and z axes, respectively (see FIGS. 1, 3 and 5). By way of example only, the angle α may be 10°-17° relative to the latitudinal plane P1, typically 12°-15°, such as 13° ± 1°, while the angle β may be 2°-10° relative to the longitudinal plane P2, typically 4°-6°, such as about 5° ± 1°. The canted sidestick grip 10 will thus be ergonomically comfortable for the pilot to grip. Furthermore, the centerline CL of the sidestick grip 10 intersects the yaw axis (axis z) of the aircraft substantially at the grip reference point (GRP) (see FIGS. 3 and 5). Such substantial coincident alignment of the GRP with the yaw axis (axis z) thereby provides zero moment arm between the GRP and the yaw axis of rotation (arrow A_{y}) of the sidestick grip 10. Such substantial coincident alignment of the GRP with the yaw axis (axis z) in turn avoids cross-axis coupling between sidestick movements in forward/aft and outboard/inboard directions (arrows A_{f}/Aₐ and Aₒ/Aᵢ, respectively) to thereby allow control the aircraft's pitch and roll axes (x- and y-axes, respectively) independent of pilot-induced twisting movements of the sidestick grip 10 in the clockwise/counterclockwise directions of (arrow A_{y}). As such, the sidestick grip 10 may be manipulated manually to control the aircraft in the pitch and roll axes (x- and y-axes, respectively) without inducing unintentional yaw torque in clockwise/counterclockwise directions to be applied to the sidestick grip 10 about the yaw axis (z-axis).

While reference is made herein to particular embodiments of the invention, various modifications within the skill of those in the art may be envisioned. Therefore, it is to be understood that the invention is not to be limited to the disclosed embodiment, but on the contrary, is intended to cover various modifications and equivalent arrangements included within the spirit and scope thereof.

## Claims

1. A sidestick grip to allow aircraft control about at least three axes, the sidestick grip comprising:
a lower grip section adapted to be gripped by a pilot's hand and defining a sidestick central axis;
a base adapted to be mounted to aircraft structure to allow movement of the lower grip section in forward/rearward directions and inboard/outboard directions to allow aircraft control about pitch and roll axes, respectively, and to allow twisting of the lower grip section in
clockwise/counterclockwise directions about a yaw axis to allow aircraft control about the yaw axis, and wherein
the lower grip section defines a grip reference point (GRP) establishing a theoretical point of application of forces onto the sidestick controller about the pitch and roll axes, wherein the yaw axis is substantially coincident with the GRP and the sidestick central axis.

2. The sidestick grip according to claim 1, wherein the base mounts the sidestick grip so as to define forward and inboard cants, preferably wherein the forward and rearward cants are relative to latitudinal and longitudinal planes, preferably wherein the forward cant is an angle α of 10°-17°, and the rearward cant is an angle β of 2°-10°.

3. The sidestick grip according to claim 1 or 2, further comprising a throttle-shaped head section joined to an upper end of the lower grip section.

4. The sidestick grip according to claim 3, wherein the throttle-shaped head section comprises:
a transversely oriented semi-cylindrical first head portion, and
a truncated conical second head portion protruding outwardly from the cylindrical first head portion in an inboard direction.

5. The sidestick grip according to claim 3 or 4, wherein the first head portion comprises:
a recessed arcuate guide, and
an arcuate segment of a thumb wheel operatively mounted to the recessed arcuate guide for thumb-activated acuate sliding movements in forward and aft directions.

6. The sidestick grip according to claim 3, 4, or 5, wherein the lower grip section includes contoured concavities allowing respective digits of a pilot's hand to rest thereagainst when the lower grip section is gripped.

7. The sidestick grip according to one of claims 3 to 6, further comprising a transition section joining the upper end of the lower grip section to the throttle-shaped head section.

8. The sidestick grip according to one of claims 3 to 7, further comprising a touch control steering (TCS) button which protrudes outwardly in an inboard direction and is adapted to being depressed by the third digit of the pilot's hand when gripping the lower grip section; and/or a push-to-talk (PTT) button outwardly protruding in a forward direction from the transition section and adapted to being depressed by the second digit of the pilot's hand when gripping the lower grip section.

9. The sidestick grip according to one of claims 3 to 8, wherein a forward surface of the throttle-shaped head section includes a contoured concavity to allow the second digit of the pilot's hand to rest thereagainst.

10. The sidestick grip according to one of the preceding claims, further comprising a quick disconnect button positioned so as to be canted outwardly in an outboard direction at an outboard side of the throttle-shaped upper section and at an elevation that is lower than that of the arcuate segment of the thumb wheel.

11. The sidestick grip according to one of the preceding claims, wherein the lower grip section includes contoured concavities allowing a respective one of the third, fourth and fifth digits of a pilot's hand to rest thereagainst when the lower grip section is gripped.

12. The sidestick grip according to one of the preceding claims, further comprising a transition section joining the upper end of the lower grip section to the throttle-shaped head section.

13. The sidestick grip according to one of the preceding claims, further comprising a touch control steering (TCS) button which protrudes outwardly in an inboard direction and is adapted to being depressed by the third digit of the pilot's hand when gripping the lower grip section; and/or a push-to-talk (PTT) button outwardly protruding in a forward direction from the transition section and adapted to being depressed by the second digit of the pilot's hand when gripping the lower grip section.

14. The sidestick grip according to one of claims 3 to 13, wherein a forward surface of the throttle-shaped head section includes a contoured concavity to allow the second digit of the pilot's hand to rest thereagainst.

15. The sidestick grip according to one of the preceding claims, wherein the base mounts the sidestick grip so as to define forward and inboard cants; wherein preferably the forward cant is at an angle α of 10°-17° relative to a latitudinal plane, and/or wherein the inboard cant is at an angle β of 2°-10° relative to a longitudinal plane.
